# EUROPEAN PATENT SPECIFICATION

(11) **EP 1 090 324 B1**
(45) Date of publication and mention of the grant of the patent: **19.07.2006**
(21) Application number: 00915304.0
(22) Date of filing: 12.04.2000
(51) Int. Cl.: G02C 5/22

(54) **ELASTIC HINGE FOR EYEGLASSES WITH SAFETY LOCKING**
FEDERSCHARNIER FÜR BRILLEN MIT SICHERHEITSVERRIEGELUNG
ARTICULATION ELASTIQUE A VERROUILLAGE DE SECURITE POUR LUNETTES

(30) Priority: 15.04.1999 IT PD990077
(43) Date of publication of application: 11.04.2001
(73) Proprietor: Visottica Industrie S. P. A., 31058 Susegana TV (IT)
(72) Inventor: MONTALBAN, Rinaldo, I-30100 Venezia (IT)
(74) Representative: Modiano, Micaela Nadia
(86) International application number: PCT/IB2000/000452
(87) International publication number: WO 2000/063739

(56) References cited:
- EP-A- 0 632 306
- DE-A- 4 415 307
- FR-A- 2 664 990
- GB-A- 2 266 783

## Description

### TECHNICAL FIELD

The present invention relates to an elastic hinge for eyeglasses with safety locking, intended to prevent the escape of the elastic means during disassembly.

### BACKGROUND ART

The field of hinges for eyeglasses offers wide variety and evolves continuously, since eyeglasses, although following for all practical purposes the dictums of fashion, must be able to ensure good technical and working characteristics.

Elastic hinges are currently preferred by far over all other hinges because they allow easier wearing of the eyeglasses and ensure their longer durability.

In hinges of this type, most of the stresses and forces that are transmitted by the user to the hinges in opening and closing the temples are in fact cushioned directly by the elastic means.

Structurally, one type of elastic hinge has, at the end of a temple, a box-like portion inside which there is provided an axially elongated seat in which a spring is present which is retained therein by a piston.

The piston slides axially inside the box-like portion and has a head which protrudes from said box-like portion and abuts against a hinge component which protrudes rigidly from the front of the eyeglasses.

The piston therefore abuts between the spring and a cam-shaped part of said hinge component and by way of its sliding with respect to the box-like portion, which produces the compression of the spring, the temple can open and close.

The main drawback of elastic hinges of this type is due to the fact that if it is necessary to disassemble the hinge, for example in order to replace a component, the piston and the spring do not remain inside the box-like portion but are literally shot out by the thrust of the spring.

The spring, when the hinge is assembled, is in fact always kept pressed against the bottom by the piston, so that it tends to return to the inactive condition as soon as it is released.

However, when this happens, the operator who is disassembling the hinge risks being hit.

In this regard, many countries have very strict statutory provisions aimed at avoiding such risks for operators.

In addition to the above-noted drawbacks, the fact should not be ignored that the spring and/or the piston are very often lost when they escape from the box-like portion during hinge disassembly. This is another reason why there is a tendency to avoid disassembling the hinges in order to replace a damaged component, preferring to replace the eyeglasses completely.

Moreover, even assuming that it is possible to solve the question in terms of operator safety, the fact cannot be ignored that the escape of the spring and piston from the box-like portion, when these components are not the ones to be replaced, prolongs and considerably increases the complexity of the subsequent hinge assembly operations.

The operator must in fact reinsert the spring and the piston in the box-like portion and this in practice makes it scarcely practical to replace a component and explains the current tendency to fully replace the eyeglasses.

### DISCLOSURE OF THE INVENTION

The aim of the present invention is to provide an elastic hinge with safety locking against the disassembly of the elastic parts which solves the drawbacks noted above of conventional hinges.

A consequent primary object of the present invention is to provide an elastic hinge which can be disassembled in full safety so that neither the spring nor the piston are shot out of the box-like portion.

Another important object is to provide an elastic hinge with safety locking against the disassembly of the elastic parts which is structurally simple and whose operation is fully equivalent to conventional hinges.

Another object is to provide an elastic hinge for eyeglasses which can be obtained by resorting to machining methods and tools which are conventional in the field.

This aim, these objects and others which will become better apparent hereinafter are achieved by an elastic hinge for eyeglasses with safety locking, comprising, at the end of a temple, a box-like portion which contains a spring which is kept compressed against its bottom by a body which can slide with respect to said box-like portion and is associated with a head which protrudes from said box-like portion and is adapted to abut against a first hinge component which partially retains it inside said box-like portion, said head and said first hinge component being cam-shaped, so as to form open and closed positions for the temple, said hinge being characterized in that it comprises a retention element which is operatively interposed so that it can slide axially between said spring and said body and has an external portion whose radial dimensions are larger than corresponding undercuts which are provided in said box-like portion and act as stroke limiters for said retention element in the direction in which the spring pushes, said external portion being shaped so as to move beyond said undercuts when said retention element is inserted in said box-like portion, said retention element retaining said spring inside the box-like portion even when said body exits completely from it.

### BRIEF DESCRIPTION OF THE DRAWINGS

Further characteristics and advantages of the present invention will become better apparent from the description of two preferred embodiments thereof, illustrated only by way of non-limitative example in the accompanying drawings, wherein:
Figure 1 is a sectional view, taken along a longitudinal plane, of an elastic hinge with safety locking according to the present invention;
Figure 2 is an exploded view of a detail of the hinge of Figure 1;
Figure 3 is a sectional view, taken along a longitudinal plane, of a detail of Figure 2;
Figure 4 is a sectional view, taken along a longitudinal plane, of the hinge of Figure 1, with the temple in the closed position;
Figure 5 is a sectional view, taken along a longitudinal plane, of the hinge of Figure 1 in the extra-wide opening position;
Figure 6 is a sectional view, taken along a longitudinal plane, of the hinge of Figure 1 with the temple in the partially-open position;
Figure 7 is a sectional view, taken along a longitudinal plane, of a second embodiment of an elastic hinge with safety locking;
Figure 8 is an exploded view of a detail of the hinge of Figure 7;
Figure 9 is a sectional view, taken along a longitudinal plane, of a third embodiment of an elastic hinge with safety locking.

### WAYS OF CARRYING OUT THE INVENTION

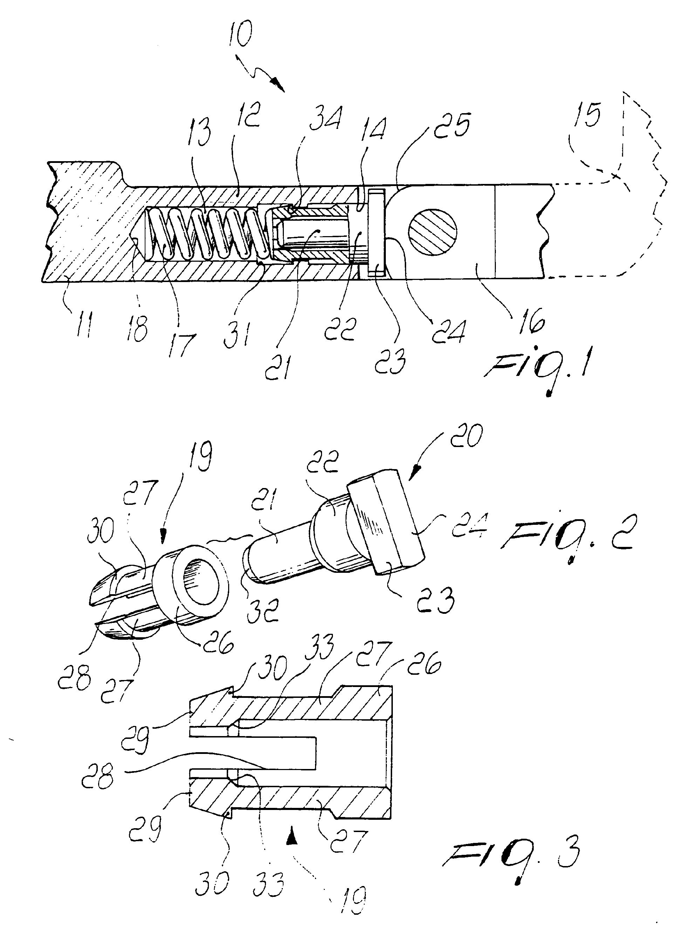

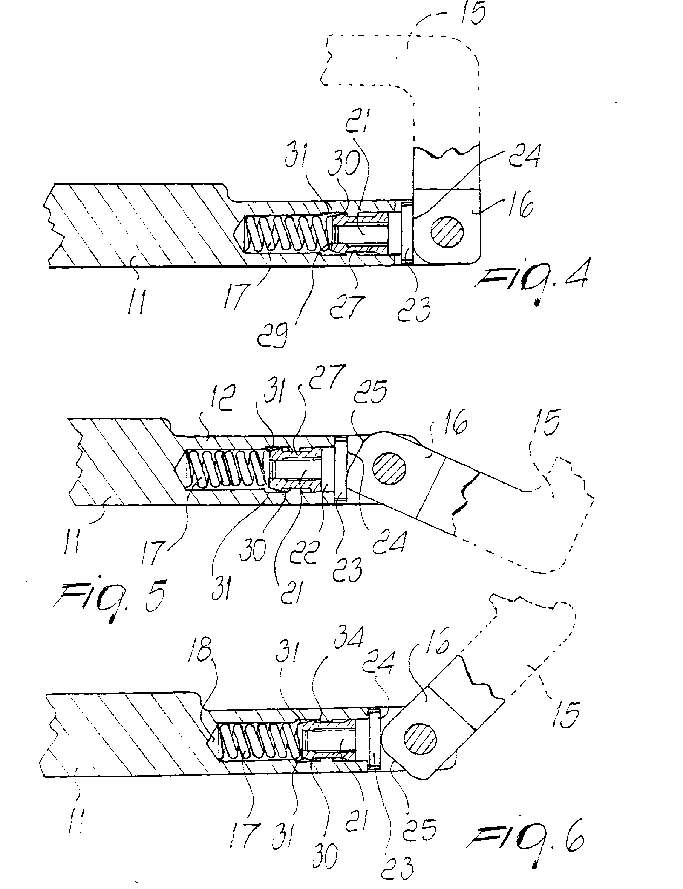

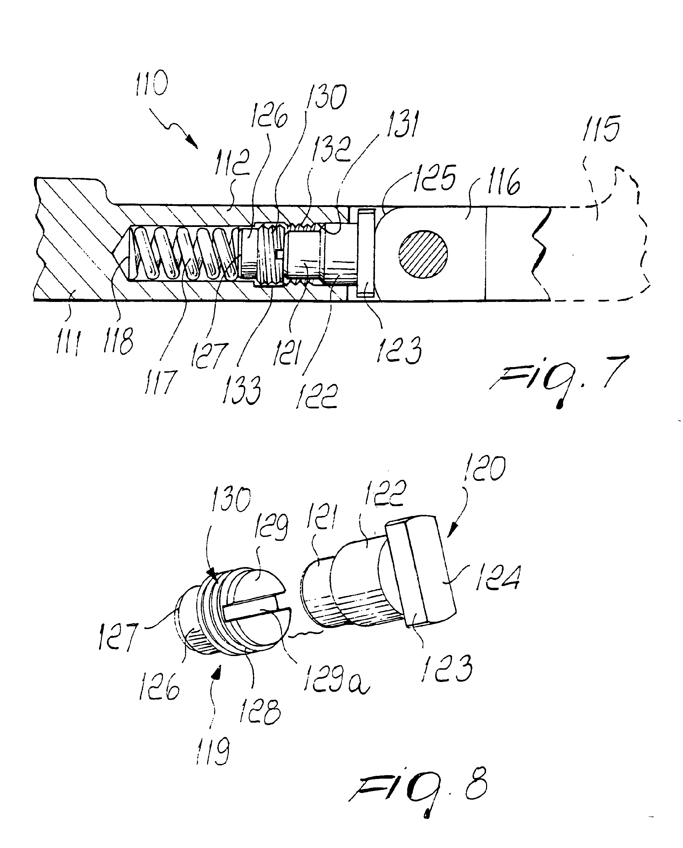

With reference to the above-cited Figures 1 to 6, an elastic hinge with safety locking, according to the present invention, is generally designated by the reference numeral 10 and comprises, at the end of a temple 11, a box-like portion 12 inside which there is an axially elongated seat 13 which can be accessed through an opening 14 formed at the part that is directed toward a front 15 of the eyeglasses.

In this case, a male hinge component 16 protrudes from the front 15 and is pivoted between the two wings of a corresponding female component, not shown for the sake of simplicity in the above figures, which protrudes rigidly, in this case, from the end of said temple 11.

A spring 17 is inserted in the box-like portion 12 through the opening 14 and is kept pushed against the bottom 18 by a retention element 19 described in detail hereinafter.

The hinge 10 further comprises a body 20 of the per se known type which is predominantly cylindrical and has a first portion 21 and a second portion 22.

Each one of said portions 21 and 22 is cylindrical and in particular the first portion 21 has a smaller diameter and is longer than the second portion 22.

A head 23 protrudes from said second portion on the opposite side with respect to the first portion 21 and is shaped like a parallelepiped.

The diameter of said second portion 22 is such as to match the diameter of the opening 14 of the box-like portion 12.

The head 23 of the body 20 has, in particular, a flat face 24 which is adapted to abut against the corresponding contoured profile 25 of the male component 16 of the hinge.

The body 20 slides axially inside the box-like portion 12, thus keeping the spring 17 pressed against the bottom 18 and its head 23 outside said box-like portion 12 in abutment against the profile 25 of the male hinge component 16.

In this manner, if the hinge 10 is disassembled, said body 20 and the spring 17, being no longer retained inside the box-like portion 12 by the male component 16, are literally shot outward.

In this embodiment, said retention element 19 has a substantially tubular overall extension, with an annular portion 26 from which a cylindrical protrusion extends on which there are two semicylindrical axial sectors 27 which are elastically deformable and are separated by a diametrical notch 28.

Each one of said semicylindrical sectors 27 has, at its end, a flat surface 29 on which the spring 17 can rest.

Each sector 27 is further externally provided, at its end part, with a semiannular raised portion 30 which is adapted to be accommodated in an appropriately provided annular bore 31 formed in the internal walls of the box-like portion 12.

It is important to note that the dimensions of the first cylindrical portion 21 of the body 20 substantially correspond to the space available between said two semicylindrical sectors 27.

The end part of said first portion 21-further has a tapering region 32.

Correspondingly, in the end part of each one of said sectors 27 there is an internal semiannular tapering region 33 which is shaped complementarily to the tapering region 32 of the body 20.

In practice, after arranging the spring 17 in the box-like portion 12 against the bottom 18, said retention element 19 is inserted, followed by the body 20.

The insertion of the retention element 19 is allowed by the flexibility of the two semicylindrical sectors 27, which can bend inward, moving beyond the radial tapering region 34 of the box-like portion in order to return to the inactive position at the bore 31 in which they arrange themselves.

In particular, the body 20 enters the box-like portion 12 after the retention element 19, arranging its first cylindrical portion 21 between the two semicylindrical sectors 27 until the tapering region 32 thereof moves into abutment against the undercut 33.

In this manner, the two semicylindrical sectors 27 are kept spaced outward and cannot flex inward, so that the respective raised portions 30 permanently engage in the bore 31 formed on the internal walls of the box-like portion 12, thus locking the retention element 19 inside it.

In this manner, the retention element 19 can slide with respect to the box-like portion 12 by an extent which is limited by the length of said bore 31, which at the same time must allow the spring 17 to keep the body 20 in abutment against the contoured profile 25 of the male hinge element 16.

The undercut 34 formed by the bore 31 on the side directed toward the front 15 constitutes in practice a stroke limiter for the retention element 19.

At the same time, if the hinge 10 is disassembled, the retention element 19 does not allow the violent expulsion of the spring 17, since it, too, remains locked within the box-like portion 12.

In practice it has been observed that the present invention has more than satisfactorily achieved the intended aim and all the objects.

The present invention is susceptible of numerous modifications and variations, all of which are within the scope of the same inventive concept.

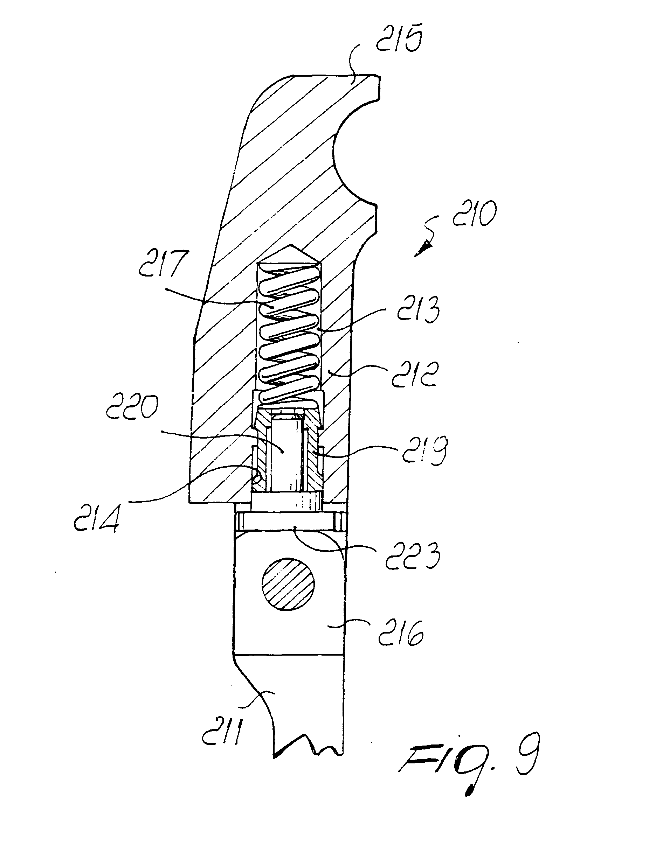

With particular reference to Figures 7 and 8, a second embodiment of a hinge with safety locking is designated by the reference numeral 110 and has, at the end of a temple 111, a box-like portion 112 which can be accessed from an opening formed at the part that is directed toward the front 115 of the eyeglasses.

The box-like portion 112 internally accommodates a spring 117 which is kept pushed against the bottom 118 by a retention element 119 which will be described in greater detail hereinafter.

The hinge 110 comprises a body 120 which is substantially equivalent to the body 20 described above; it, too, has a cylindrical shape, with a first portion 121 and second portion 122.

Each one of said portions 121 and 122 is cylindrical, and in particular the first portion 121, although being substantially equivalent in length, has a smaller diameter than the second portion 122.

A head 123 shaped like a parallelepiped protrudes from said second portion, on the opposite side with respect to the first portion 121.

The diameter of said second portion 122 is such as to correspond to the diameter of the opening of the box-like portion 112.

The head 123 has a flat face 124 which is adapted to be arranged in abutment against the corresponding contoured profile 125 of a hinge component 116, which is associated with the front 115 of the eyeglasses.

In this second embodiment, said retention element 119 has an overall cylindrical shape, with a first component 126 which has a first face 127 which is adapted to abut against the spring 117.

A second component 128 protrudes monolithically from the opposite side; it, too, is cylindrical and has a second face 129 on which a recess 129a for a screwdriver is present; said face is adapted to abut against the first portion 121 of the body 120, and on the outer surface of said second component there is a threaded region 130.

Correspondingly, on the internal walls of said box-like portion 112 there is, starting from the opening, a first region 131 whose dimensions are equivalent to those of the second portion 122 of the body 120, a second threaded region 132 which constitutes a radial tapering region for accessing the box-like portion 112, and then a third wider region 133.

In particular, the second component 128 of the retention element 119 is shaped complementarily to the second threaded portion 132 of the box-like portion 112.

In this manner, after arranging the spring 117 in the box-like portion 112 against the bottom 118, said retention element 119 is inserted by fully screwing it at the second threaded region 132 until it lies at the third wider region 133.

The retention element 119 is thus locked inside the box-like portion 112 but can slide axially along the length of the third wider region 133.

After doing this, the body 120 is inserted and its first portion 121 is placed against the second face 129 of the retention element 119.

In this manner, the sliding of the retention element 119 limited to the third wider region 133 is sufficient to allow the spring 117 to retain the body 120 in abutment against the contoured profile 125 of the hinge component 116.

In this case, too, during the disassembly of the hinge 110, the retention element 119 does not allow the spring 117 to be shot out, since it too remains locked inside the box-like portion 112 due to the interference between its threaded region 130 and the complementarily shaped second region 132 of the box-like portion 112, which prevents any axial translatory motion.

With reference to Figure 8, a third embodiment of elastic hinge with safety locking, according to the present invention, is designated in this case by the reference numeral 210 and comprises a box-like portion 212 which in this case protrudes monolithically from the front 215 of the eyeglasses and inside which there is a seat 213 which can be accessed through an opening 214 which is formed at the part that is directed toward the temple 211.

In this case, a male hinge component 216 protrudes from the end of said temple 211 and is pivoted between the two wings of a corresponding female component, not shown for the sake of simplicity, which protrudes from the front 215.

Also in this case, inside the box-like portion 212 there is a spring 217 which is kept pushed against the bottom by a retention element 219 which is fully equivalent to the preceding one designated by the reference numeral 19.

The hinge 210 further comprises a cylindrical body 220 which is equivalent to the preceding body 20, is adapted to slide inside the box-like portion 212 and has a head 223 which is adapted to abut against the corresponding profile of the male component 216.

In summary, in this configuration too, the spring 217 is arranged in the box-like portion 212 and said retention element 219 and then the body 220 are inserted.

The retention element 219 is locked inside the box-like portion 212, as described above, so that it can slide with respect to it by a limited extent and thus allow the spring 217 to retain the body 220 in abutment against the male hinge element 216.

At the same time, in case of disassembly of the hinge 210, the retention element 219 does not allow the spring 217 to shoot out because it remains locked inside the box-like portion 212.

With the embodiments illustrated in the present invention, an important advantage has been achieved which is linked to the fact that hinges have been provided which have a safety locking and can be disassembled in full safety without the spring or the body being shot out of the box-like portion.

Another important advantage has been achieved in that elastic hinges with safety locking against the disassembly of the elastic parts have been provided which are structurally very simple and whose operation is fully equivalent to conventional hinges.

Further, it is very important to note that the disclosed elastic hinges for eyeglasses can be obtained by resorting to machining methods and tools which are conventional in the field.

All the details may be replaced with other technically equivalent elements.

The materials used, so long as they are compatible with the contingent use, as well as the dimensions, may be any according to requirements.

## Claims

1. An elastic hinge for eyeglasses with safety locking, comprising, at the end of a temple (11), a box-like portion (12) which contains a spring (17) which is kept compressed against its bottom (18) by a body (10) which can slide with respect to said box-like portion and is associated with a head (23) which protrudes from said box-like portion and is adapted to abut against a first hinge component (16) which partially retains it inside said box-like portion, said head and said first hinge component being cam-shaped, so as to form open and closed positions for the temple, said hinge being **characterized in that** it comprises a retention element (19) which is operatively interposed so that it can slide axially between said spring and said body (20) and has an external portion (29) whose radial dimensions are larger than corresponding undercuts (34) which are provided in said box-like portion and act as stroke limiters for said retention element in the direction in which the spring pushes, said external portion being shaped so as to move beyond said undercuts when said retention element is inserted in said box-like portion, said retention element retaining said spring inside the box-like portion even when said body exits completely from it.

2. The hinge according to claim 1, **characterized in that** said retention element (14) has a tubular shape in which there is at least one flexible sector having, at its outer part, a raised portion (26) which is adapted to be accommodated in an adapted bore formed in the internal walls of said box-like portion.

3. The hinge according to claim 2, **characterized in that** said retention element has two flexible semicylindrical sectors, each of which has, in the outer part, a semiannular raised portion (30) which is adapted to be accommodated in said annular bore of the box-like portion.

4. The hinge according to claim 3, **characterized in that** the space available between said semicylindrical sectors corresponds to the dimensions of a first portion (21) of said body (20) which prevents the inward flexing of said sectors by inserting itself between them, so as to allow the engagement of the respective raised portions in the bore of the box-like portion.

5. The hinge according to claim 4, **characterized in that** the end part of said first portion of the body (20) has a tapering region and **in that** a semiannular tapering abutment region is formed internally in the corresponding part of each one of said sectors.

6. The hinge according to claim 1, **characterized in that** said retention element (119) is at least partially cylindrical and externally threaded (130), a threaded portion (132) being formed on the internal walls of said box-like portion, starting from the opening, said threaded portion constituting a radial tapering region for accessing the box-like portion and then a wider region, said cylindrical part of the retention element being shaped complementarily to said threaded region of the box-like portion.

7. The hinge according to claim 6, **characterized in that** on said retention element there is a face which is adapted to abut against said body and on which a recess (129a) for a screwdriver is present.

## Patentansprüche

1. Elastisches Scharnier für Brillen mit Sicherheitsverriegelung, umfassend einen kastenartigen Teil (12) am Ende eines Bügels (11), der eine Feder (17) enthält, die gegen ihr Unterteil (18) durch einen Körper (20) komprimiert gehalten ist, der sich in Bezug auf den kastenartigen Teil verschieben kann und dem ein Kopf (23) zugeordnet ist, der von dem kastenartigen Teil hervorsteht und geeignet ist, gegen eine erste Scharnierkomponente (16) anzuliegen, die sie teilweise im kastenartigen Teil hält, wobei der Kopf und die erste Scharnierkomponente nockenförmig sind, so dass sie offene und geschlossene Positionen für den Bügel bilden, wobei das Scharnier **dadurch gekennzeichnet ist, dass** es ein Halteelement (19) umfasst, das operativ dazwischen gesetzt ist, so dass es sich axial zwischen der Feder und dem Körper (20) verschieben kann und einen Außenteil (29) aufweist, dessen radiale Abmessungen größer sind als entsprechende Unterschnitte (34), die in dem kastenartigen Teil vorgesehen sind und als Hubbegrenzer für das Halteelement in die Richtung wirken, in die die Feder drückt, wobei der Außenteil so geformt ist, dass er sich über die Unterschnitte hinaus bewegt, wenn das Halteelement in den kastenartigen Teil eingesetzt ist, wobei das Halteelement die Feder in dem kastenartigen Teil hält, wenn der Körper vollständig daraus heraustritt.

2. Scharnier nach Anspruch 1, **dadurch gekennzeichnet, dass** das Halteelement (14) eine röhrenartige Form aufweist, in der mindestens ein flexibler Sektor vorhanden ist, der an seinem äußeren Teil einen erhabenen Teil (26) aufweist, der geeignet ist, dass er in eine geeignete Bohrung eingebracht wird, die in den Innenwänden des kastenartigen Teils ausgebildet ist.

3. Scharnier nach Anspruch 2, **dadurch gekennzeichnet, dass** das Halteelement zwei flexible halbzylinderförmige Sektoren aufweist, deren jeder im äußeren Teil einen halbkreisförmigen erhabenen Teil (30) aufweist, der geeignet ist, dass er in die runde Bohrung des kastenartigen Teils eingebracht wird.

4. Scharnier nach Anspruch 3, **dadurch gekennzeichnet, dass** der zwischen den halbzylinderförmigen Sektoren verfügbare Raum den Abmessungen eines ersten Teils (21) des Körpers (20) entspricht, was verhindert, dass die Sektoren sich nach innen biegen, indem er sich dazwischen setzt, so dass ermöglicht ist, dass die entsprechenden erhaltenen Teile in der Bohrung des kastenartigen Teils eingreifen.

5. Scharnier nach Anspruch 4, **dadurch gekennzeichnet, dass** der Endteil des ersten Teils des Körpers (20) einen verjüngten Bereich aufweist und **dadurch**, dass ein halbkreisförmiger verjüngter Anschlagbereich innen im entsprechenden Teil jedes der Sektoren ausgebildet ist.

6. Scharnier nach Anspruch 1, **dadurch gekennzeichnet, dass** das Halteelement (19) mindestens teilweise zylindrisch und mit Außengewinde (30) versehen ist, wobei ein Gewindeteil (132) auf den Innenwänden des kastenartigen Teils ausgebildet ist, beginnend an der Öffnung, wobei der Gewindeteil einen radial verjüngten Bereich zum Einlassen des kastenartigen Teils bildet und dann einen weiteren Bereich, wobei der zylindrische Teil des Halteelements komplementär zu dem Gewindebereich des kastenartigen Teils geformt ist.

7. Scharnier nach Anspruch 6, **dadurch gekennzeichnet, dass** am Halteelement eine Seite vorhanden ist, die geeignet ist, gegen den Körper anzuliegen und auf der eine Ausnehmung (129a) für einen Schraubendreher vorhanden ist.

## Revendications

1. Charnière élastique pour lunettes avec un verrouillage de sécurité, comprenant, à l'extrémité d'une branche (11), une partie en forme de boîte (12) qui contient un ressort (17) qui est maintenu comprimé contre son fond (18) par un corps (10) qui peut coulisser par rapport à ladite partie en forme de boîte et qui est associé avec une tête (23) qui fait saillie à partir de ladite partie en forme de boîte et qui est adaptée pour buter contre un premier élément de charnière (16) qui maintient partiellement celle-ci à l'intérieur de ladite partie en forme de boîte, ladite tête et ledit premier composant de charnière étant en forme de came, de façon à former des positions ouverte et fermée pour la branche, ladite charnière étant **caractérisée en ce qu'**elle comprend un élément de rétention (19) qui est interposé de façon opérationnelle de telle sorte qu'il puisse coulisser axialement entre ledit ressort et ledit corps (20) et qui comporte une partie externe (29) dont les dimensions radiales sont supérieures à celles d'entailles correspondantes (34) qui sont réalisées dans ladite partie en forme de boîte et qui jouent le rôle de limiteurs de course pour ledit élément de rétention dans la direction dans laquelle pousse le ressort, ladite partie externe étant conformée de façon à se déplacer au-delà desdites entailles lorsque ledit élément de rétention est inséré dans ladite partie en forme de boîte, ledit élément de rétention maintenant ledit ressort à l'intérieur de la partie en forme de boîte même lorsque ledit corps sort complètement de celle-ci.

2. Charnière selon la revendication 1, **caractérisée en ce que** ledit élément de rétention (19) a une forme tubulaire dans laquelle il y a au moins un secteur souple comportant, dans sa partie extérieure, une partie surélevée (26) qui est adaptée pour être reçue dans un perçage adapté formé dans les parois internes de ladite partie en forme de boîte.

3. Charnière selon la revendication 2, **caractérisée en ce que** ledit élément de rétention comporte deux secteurs semi-cylindriques souples dont chacun comporte, dans la partie extérieure, une partie semi-annulaire surélevée (30) qui est adaptée pour être reçue dans ledit perçage annulaire de la partie en forme de boîte.

4. Charnière selon la revendication 3, **caractérisée en ce que** l'espace disponible entre lesdits secteurs semi-cylindriques correspond aux dimensions d'une première partie (21) dudit corps (20) qui empêche la flexion vers l'intérieur desdits secteurs par insertion de celle-ci entre eux, de façon à permettre la mise en prise des parties surélevées respectives dans le perçage de la partie en forme de boîte.

5. Charnière selon la revendication 4, **caractérisée en ce que** la partie d'extrémité de ladite première partie du corps (20) comporte une région effilée, et **en ce qu'**une région de butée effilée semi-annulaire est formée intérieurement dans la partie correspondante de chacun desdits secteurs.

6. Charnière selon la revendication 1, **caractérisée en ce que** ledit élément de rétention (119) est au moins partiellement cylindrique et extérieurement fileté (130), une partie filetée (132) étant formée sur les parois internes de ladite partie en forme de boîte, à partir de l'ouverture, ladite partie filetée constituant une région effilée radiale pour accéder à la partie en forme de boîte, puis à une région plus large, ladite partie cylindrique de l'élément de rétention étant conformée de façon complémentaire à ladite région filetée de la partie en forme de boîte.

7. Charnière selon la revendication 6, **caractérisée en ce que** sur ledit élément de rétention se trouve une face qui est adaptée pour buter contre ledit corps et sur laquelle est présente une cavité (129a) pour un tournevis.
